**Europäisches Patentamt**

**European Patent Office**

**Office européen des brevets**

(19)

(11) Veröffentlichungsnummer: **0 267 346 B1**

# EUROPÄISCHE PATENTSCHRIFT

(12)

(45) Veröffentlichungstag der Patentschrift:
16.01.91 Patentblatt 91/03

(51) Int. Cl.⁵: **G01C 5/00, G01S 13/86**

(21) Anmeldenummer: **86710007.5**

(22) Anmeldetag: **12.11.86**

(54) **Verfahren zur Bestimmung der Flughöhe eines Fluggeräts.**

(43) Veröffentlichungstag der Anmeldung:
**18.05.88 Patentblatt 88/20**

(45) Bekanntmachung des Hinweises auf die
Patenterteilung:
**16.01.91 Patentblatt 91/03**

(84) Benannte Vertragsstaaten:
**DE ES FR GB IT SE**

(56) Entgegenhaltungen:
**FR-A- 2 343 225**
**FR-A- 2 466 751**
**US-A- 4 431 994**

(73) Patentinhaber: **LITEF GmbH**
**Lörracher Strasse 18**
**D-7800 Freiburg/Br. (DE)**

(72) Erfinder: **Hassenpflug, Wolfgang**
**Reutestrasse 2**
**D-7800 Freiburg i. Br. (DE)**

(74) Vertreter: **TER MEER - MÜLLER -**
**STEINMEISTER & PARTNER**
**Mauerkircherstrasse 45**
**D-8000 München 80 (DE)**

EP 0 267 346 B1

## Beschreibung

Die Erfindung betrifft ein Verfahren zur Bestimmung der Höhe eines Fluggeräts über Grund, das mit einem Radar-Höhenmesser und mit einer weiteren nichtstrahlenden Flughöhen-Meßeinrichtung ausgerüstet ist.

Bei Fluggeräten, worunter vorwiegend Starr- und Drehflügler bzw. Flugkörper verstanden werden, wird vielfach ein Radar-Höhenmesser zur Bestimmung der Höhe über Grund eingesetzt. Nachteilig dabei ist die Ausstrahlung von Hochfrequenzleistung, durch deren Empfang das Fluggerät vorzeitig entdeckt und lokalisiert werden kann. Die Entdeckungsreichweite wächst mit der Höhe über Grund, dem Lagewinkel und der abgestrahlten Leistung, die z.B. bei modernen Radar-Höhenmessern in Abhängigkeit vom Signal/Rausch-Verhältnis des Empfangssignals gesteuert wird, so daß die abgestrahlte Leistung mit der Höhe wächst.

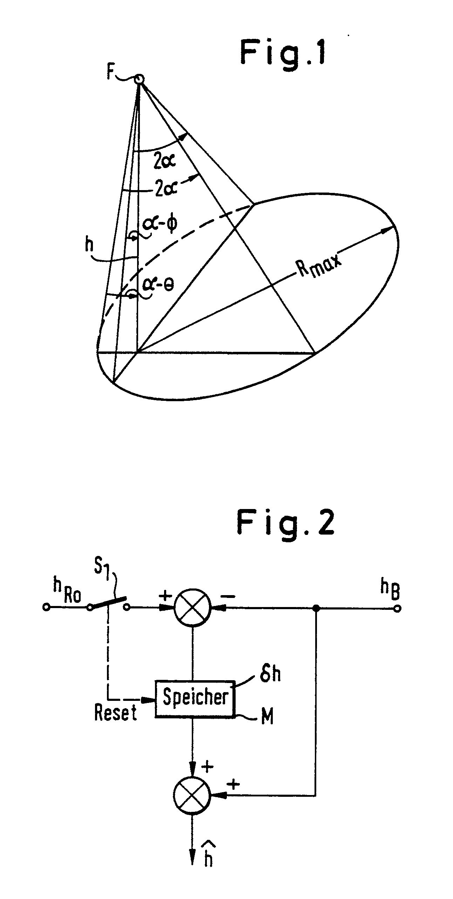

Aus der beigefügten Fig. 1 lassen sich die Reichweiten am Boden abschätzen. In dieser Figur sind mit

F           das Fluggerät;

$\alpha$ bzw. $2\alpha$   der Abstrahlwinkel;

h           die Höhe über Grund;

$\Phi$, $\Theta$       die Lagewinkel (Roll- bzw. Nickwinkel);

$R_{max}$       die maximale (rechnerische) Reichweite am Boden.

Für die maximale Reichweite am Boden gilt

$$R_{max} = h \cdot \cos\left(\frac{1}{4}\pi - \Phi - \theta\right)\{(tg\ (\alpha+\Phi)^2 + (tg\ (\alpha+\theta)^2\}\frac{1}{2} \quad (Gl.\ 1)$$

Dabei wird angenommen, daß für $\Phi$ bzw. $\theta \geq \alpha$ der Radarhöhenmesser nicht mehr zur Bestimmung der Höhe über Grund herangezogen wird. Bei vielen eingesetzten Radarhöhenmessern gilt $\alpha \approx 20°$.

Der Erfindung liegt die Aufgabe zugrunde, die Entdeckungswahrscheinlichkeit eines Fluggeräts aufgrund der von einem Radar-Höhenmesser abgestrahlten HF-Emission wesentlich zu vermindern.

Das erfindungsgemäße Verfahren zur Bestimmung der Höhe eines Fluggeräts über Grund, das mit einem Radar-Höhenmesser und mit einer weiteren nichtstrahlenden Flughöhen-Meßeinrichtung, vorzugsweise einer in ein Trägheitsnavigationssystem eingebundenen barometrischen Höhenmeßeinrichtung bzw. mit einer inertialen Höhenmeßeinrichtung als Teil eines Kurs- und Lagereferenzsystems, ausgerüstet ist, ist dadurch gekennzeichnet, daß das zur Gewinnung der Radarhöhe $h_{Ro}$ erforderliche HF-Signal wiederholt, jedoch pro Meßvorgang nur kurzzeitig und mit Sendepausenzeitabständen abgestrahlt wird, die wesentlich länger sind als die zur Gewinnung eines gültigen Radar-Höhenmeßwerts erforderliche Sendezeit, daß der jeweils aktuelle Wert der Radarhöhe $h_{Ro}$ von dem durch die weitere nichtstrahlende Flughöhen-Meßeinrichtung gelieferten Höhenwert $h_B$ abgezogen und der Differenzwert $\delta h$ mindestens für die Dauer der folgenden Sendepausenzeit gespeichert wird, und daß die jeweils aktuelle gültige Höhe $\hat{h}$ als um den gespeicherten Differenzwert $\delta h$ korrigierter Höhenwert $h_B$ ausgegeben wird.

Gemäß der Lehre der Erfindung ist also zur Vermeidung des erläuterten, die Überlebenswahrscheinlichkeit des Fluggeräts stark beeinträchtigenden Nachteils der kontinuierlichen Radar-Höhenmessung vorgesehen, die HF-Emission des Radar-Höhenmessers während der überwiegenden Dauer eines Flugs zu unterbinden und den Radar-Höhenmesser nur zur Eichung der Druckhöhe zu verwenden bzw. zur Eichung der aus der baro-inertialen Schleife eines Trägheitsnavigationssystems bzw. des inertialen Höhenwerts zu verwenden, der von einem Kurs- und Lagereferenzsystem geliefert wird.

Die Erfindung bzw. deren vorteilhafte Einzelheiten werden nachfolgend unter Bezug auf die Zeichnung in einer beispielsweisen Ausführungsform näher erläutert. Es zeigen :

Fig. 1 eine bereits erläuterte Winkeldarstellung zur Bestimmung der Reichweite eines von einem Radar-Höhenmesser abgestrahlten HF-Signals am Boden, und

Fig. 2 ein Systemblockschaltbild für das erfindungsgemäße Eichverfahren.

Gemäß Fig. 2 kann die Eichung der Druckhöhenwerte bzw. der inertialen Höhenwerte beispielshalber so vorgenommen werden, daß die Differenz $\delta h$ aus der Druck- bzw. inertialen Höhe $h_B$ und der Radarhöhe

$h_{Ro}$ gebildet wird, wenn ein Schalter $S_1$ geschlossen wird, der z.B. die Emission des Radar-Höhenmessers repräsentiert, geschlossen ist. Der Differenzwert $\delta h$ wird in einem Speicher M mindestens für die Dauer der Sendepause des HF-Signals gespeichert und vorzeichenrichtig der Druckhöhe bzw. der inertialen Höhe $h_B$ hinzugefügt. Der erhaltene und ausgegebene Wert der Höhe $\hat{h}$ repräsentiert damit die bei der Eichung vorhandene Höhe über Grund und entspricht für die darauffolgende Dauer, bis der nächste Meßwert der Radar-Höhenmessung vorliegt, dem um den Eichwert bzw. Differenzwert $\delta h$ korrigierten kontinuierlichen Wert der Druckhöhe bzw. inertialen Höhe $h_B$.

Aus der Fig. 2 ergibt sich:

$$\delta h = h_B - h_{Ro} \quad (G1. 2)$$

und

$$\hat{h} = h_B + \delta H \quad (G1. 3)$$

Die Eichintervalle zur Gewinnung des Differenzwerts $\delta h$ können periodisch sein oder aber vorteilhafterweise entsprechend einer statistischen Codierung innerhalb festgelegter Zeitabstandsgrenzen schwanken. Die maximale Zeit zwischen zwei aufeinanderfolgenden Eichungen hängt dabei vom Wetter, insbesondere von Luftdruckschwankungen und damit von Schwankungen der Druckhöhe bzw. der inertialen Höhe, der Flughöhe sowie von der Welligkeit des Geländes ab. Bei stark welligem Gelände wird eine vergleichsweise häufige Radar-Höhenmessung zur Gewinnung des Eichwerts bzw. Druckdifferenzwerts $\delta h$ erforderlich sein. In diesem Anwendungsfall ist aber die Reichweite in der Regel geringer. Wegen der weiteren HF-Abstrahlung ist die Erfindung aber auch besonders bei relativ ebenem Gelände von besonderem Vorteil bei dem Ziel, die Entdeckungswahr scheinlichkeit zu vermindern.

Als besonderer Vorteil des erfindungsgemäßen Verfahrens ergibt sich aus der Lehre, daß die HF-Emission auf sehr kurze Zeiten beschränkt werden kann, die Möglichkeit bei Raketen und sogenannten SRSOMs (Short Range Stand-Off Missiles) vollständig auf den Einbau eines Radar-Höhenmessers dadurch zu verzichten, daß die beschriebene Eichung der Druck- bzw. der inertialen Höhe vor dem Abgang des Flugkörpers vom Trägerflugzeug vorgenommen wird.

## Ansprüche

1. Verfahren zur Bestimmung der Höhe $\hat{h}$ eines Fluggeräts über Grund, das mit einem Radar-Höhenmesser und mit einer weiteren, nichtstrahlenden Flughöhen-Meßeinrichtung ausgerüstet ist, **dadurch gekennzeichnet, daß**
   – das zur Gewinnung der Radarhöhe $h_{Ro}$ erforderliche HF-Signal wiederholt, jedoch pro Meßvorgang nur kurzzeitig und mit Sendepausenzeitabständen abgestrahlt wird, die wesentlich länger sind als die zur Gewinnung eines gültigen Radar-Höhenmeßwerts erforderliche Sendezeit,
   – der jeweils aktuelle Wert der Radarhöhe $h_{Ro}$ von dem durch die weitere, nichstrahlende Flughöhen-Meßeinrichtung gelieferten Höhenwert $h_B$ abgezogen und der Differenzwert $\delta h$ mindestens für die Dauer der folgenden Sendepausenzeit gespeichert wird, und daß
   – die jeweils aktuell gültige Höhe $\hat{h}$ als um den gespeicherten Differenzwert $\delta h$ korrigierter Höhenwert $h_B$ ausgegeben wird.

2. Verfahren nach Anspruch 1, **dadurch gekennzeichnet, daß** der Differenzwert $\delta h$ zu dem von der weiteren, nichtstrahlenden Flughöhen-Meßeinrichtung gelieferten Höhenwert $h_B$ hinzuaddiert wird.

3. Verfahren nach Anspruch 1 oder 2, **dadurch gekennzeichnet, daß** der gespeicherte Differenzwert $\delta h$ bei Auslösen eines neuen HF-Sendesignals zur Gewinnung eines aktuellen Werts der Radarhöhe $h_{Ro}$ gelöscht wird.

4. Verfahren nach einem der vorstehenden Ansprüche, **dadurch gekennzeichnet, daß** die Sendepausenzeitabstände innerhalb vorgebbarer Mindest- und Höchstdauern mit statistischer Codierung verändert werden.

5. Verfahren nach einem der vorstehenden Ansprüche 1 bis 3, **dadurch gekennzeichnet, daß** die Sendepausenzeitabstände in ungefährer Anpassung an die Geländeformation eingestellt werden.

6. Verfahren nach Anspruch 1, **dadurch gekennzeichnet, daß** als weitere, nichtstrahlende Flughöhen-Meßeinrichtung ein mit einem Trägheitsnavigationssystem gekoppelter barometrischer Druckhöhenmesser verwendet wird.

7. Verfahren nach Anspruch 1, **dadurch gekennzeichnet**, daß als der zu korrigierende Höhenwert $h_B$ ein von einem Kurs- und Lagereferenzsystem gelieferter inertialer Höhenwert verwendet wird.

8. Verfahren nach Anspruch 1, **dadurch gekennzeichnet,** daß die in einem Flugkörper vorhandene baroinertiale Höhenmeßeinrichtung durch den Radar-Höhenmesser eines Trägerflugzeuges kurz vor Abgang des Flugkörpers kalibriert wird.

## Claims

1. Method of determining the altitude $\hat{h}$ above ground of an aircraft which is equipped with a radar altimeter and with a further non-radiating flight-altitude measuring device, characterized in that the high-frequency signal necessary for obtaining the radar altitude $h_{Ro}$ is repeated, but in each measuring process is emitted only briefly and at intermission intervals which are substantially longer than the transmission time required for obtaining a valid radar altitude measurement, in that the particular current value of the radaraltitude $h_{Ro}$ is subtracted from the altitude value $h_B$ supplied by the further non-radiating flight-altitude measuring device and the difference $\delta h$ is stored at least for the duration of the following intermission interval, and in that the particular current valid altitude $\hat{h}$ is output as an altitude value $h_B$ corrected by the amount of the stored difference $\delta h$.

2. Method according to Claim 1, characterized in that the difference $\delta h$ is added to the altitude value $h_B$ supplied by the further non-radiating flight-altitude measuring device.

3. Method according to Claim 1 or 2, characterized in that the stored difference $\delta h$ is erased when a new high-frequency transmission signal is triggered in order to obtain a current value for the radar altitude $h_{Ro}$.

4. Method according to one of the preceding Claims, characterized in that the intermission intervals are varied within predeterminable minimum and maximum durations by means of a statistical coding.

5. Method according to one of the preceding Claims 1 to 3, characterized in that the intermission intervals are set in approximate coordination with the form of the terrain.

6. Method according to Claim 1, characterized in that a barometric pressure altimeter coupled to an inertial navigation system is used as a further non-radiating flight-altitude measuring device.

7. Method according to Claim 1, characterized in that an inertial altitude value supplied by a course and position reference system is used as the altitude value $h_B$ to be corrected.

8. Method according to Claim 1, characterized in that the baro-inertial altitude-measuring device present in a missile is calibrated by the radar altimeter of a carrier aircraft shortly before the missile leaves.

## Revendications

1. Procédé pour déterminer l'altitude $\hat{h}$ au-dessus du sol d'un aéronef équipé d'un altimètre par radar et d'un dispositif de mesure de hauteur de vol supplémentaire non émetteur, **caractérisé en ce**

 – que le signal HF pour l'acquisition de la hauteur radar $h_{Ro}$ est répété, mais émis seulement temporairement pour chaque opération de mesure et avec des intervalles de pause qui sont considérablement plus longs que le temps d'émission nécessaire pour l'obtention d'une valeur de mesure de hauteur radar valable ;
 – que la valeur momentanée respective de la hauteur radar $h_{Ro}$ est soustraite de la valeur altimétrique $h_B$ fournie par le dispositif de mesure de hauteur de vol supplémentaire non émetteur, et que la valeur différentielle $\delta h$ est mémorisée au moins pour la durée de la pause suivante, et

 – que la hauteur momentanée $\hat{h}$ respectivement valable est sortie en tant que valeur altimétrique $h_B$ corrigée de la valeur différentielle $\delta h$.

2. Procédé selon la revendication 1, caractérisé en ce que la valeur différentielle $\delta h$ est ajoutée à la valeur altimétrique $h_B$ fournie par le dispositif de mesure de hauteur de vol supplémentaire non émetteur.

3. Procédé selon l'une des revendications 1 ou 2, caractérisé en ce que, lors du déclenchement d'un nouveau signal d'émission HF pour l'acquisition d'une valeur momentanée de la hauteur radar $h_{Ro}$ la valeur différentielle $\delta h$ mémorisée est effacée.

4. Procédé selon l'une des revendications précédentes, caractérisé en ce que les intervalles de pause sont modifiés avec un codage statistique à l'intérieur de durées minimales et maximales prédétetminables.

5. Procédé selon l'une des revendications 1 à 3, caractérisé en ce que les intervalles de pause sont réglés avec adaptation approximative à la configuration du terrain.

6. Procédé selon la revendication 1, caractérisé en ce qu'il utilise comme dispositif de mesure de hauteur de vol supplémentaire non émetteur un altimètre barométrique couplé avec un système de navigation inertielle.

7. Procédé selon la revendication 1, caractérisé en ce qu'il utilise comme valeur altimétrique $h_B$ à corriger une valeur altimétrique inertielle fournie par un système de référence de cap et de position.

8. Procédé selon la revendication 1, caractérisé en ce que le dispositif de mesure altimétrique baro-inertielle monté sur un missile est calibré, peu avant le départ du missile, par l'altimètre par radar d'un avion porteur.

# Fig.1

# Fig.2